# EUROPEAN PATENT APPLICATION

(11) **EP 4 276 941 A1**
(43) Date of publication of application: **15.11.2023**
(21) Application number: 23169775.6
(22) Date of filing: 25.04.2023
(51) Int. Cl.: H01M 4/1391, H01M 4/36, H01M 4/525, H01M 4/62, C01G 53/00

(54) **POSITIVE ELECTRODE ACTIVE MATERIAL AND MANUFACTURING METHOD FOR THE SAME, AND NONAQUEOUS ELECTROLYTE SECONDARY BATTERY INCLUDING POSITIVE ELECTRODE ACTIVE MATERIAL**

(30) Priority: 11.05.2022 JP 2022078369
(71) Applicant: Prime Planet Energy & Solutions, Inc., Chuo-ku Tokyo 103-0022 (JP)
(72) Inventor: SUZUKI, Shinya, Tokyo, 103-0022 (JP); TSUJIKO, Akira, Tokyo, 103-0022 (JP)
(74) Representative: Kuhnen & Wacker Patent- und Rechtsanwaltsbüro PartG mbB

(57) **Abstract**

A positive electrode active material (1) disclosed herein includes a Ni content lithium complex oxide (2) containing 70 mol% or more of nickel relative to the total of metal elements other than lithium, and a boron element (4). The Ni content lithium complex oxide (2) is in a form of a secondary particle in which primary particles (2a) are aggregated and has a porosity of 2% or more and 10% or less, and inside the secondary particle, a larger space than an average cross-sectional area of the primary particles (2a) does not exist. The boron element (4) is contained by 0.5 to 3 mol% when the total of metal elements of the Ni content lithium complex oxide (2) is 100 mol%.

## Description

### BACKGROUND OF THE DISCLOSURE

### 1. Field

The present disclosure relates to a positive electrode active material and a manufacturing method for the same, and a nonaqueous electrolyte secondary battery including the positive electrode active material.

### 2. Background

A positive electrode of a nonaqueous electrolyte secondary battery generally includes a lithium complex oxide as a positive electrode active material (for example, see Japanese Patent Application Publication No. 2015-22950 and Japanese Patent Application Publication No. 2021-5548). For example, Japanese Patent Application Publication No. 2015-22950 discloses, as a positive electrode active material, a lithium-nickel-cobalt-manganese complex oxide containing 30 to 60 mol% of nickel (Ni) relative to the total of metal elements other than lithium.

### SUMMARY

The nonaqueous electrolyte secondary battery has been required to have higher performance along with its widespread use. In view of this, from the viewpoints of improving energy density and the like, it has recently been examined to use a lithium complex oxide containing Ni as high as 70 mol% or more as the positive electrode active material. According to examinations by the present inventors, however, using the lithium complex oxide with such a high Ni content (hereinafter also referred to as "high Ni content lithium complex oxide") has resulted in a problem of a remarkable decrease of a cycle characteristic compared to using a conventional lithium complex oxide with a low Ni content.

The present disclosure has been made in view of the above circumstances and a main object of the present disclosure is to provide a positive electrode active material that can achieve a nonaqueous electrolyte secondary battery with high energy density and an excellent cycle characteristic.

As a result of various examinations by the present inventors about the reason why the cycle characteristic decreases in a case of using a lithium complex oxide with a high Ni content, the following is considered, although the reason is not limited in particular. That is to say, the lithium complex oxide is often present in a form of a secondary particle formed by aggregation of primary particles and in such a mode, the primary particles contract largely under high voltage to make the secondary particle smaller than before charging. Therefore, an electrolyte easily enters between the secondary particles and the entered electrolyte may react on a surface of the primary particle to form a film. Such a film grows as charging and discharging are repeated, and along with this, the stress between the particles at expansion increases. As a result, a crack easily occurs to the primary particle. Accordingly, it is considered that conductivity decreases and the primary particles are isolated in the lithium complex oxide with the high Ni content and in the end, the cycle characteristic decreases. In view of this, the present disclosure has been made.

The present disclosure provides a positive electrode active material including a Ni content lithium complex oxide containing 70 mol% or more of nickel relative to a total of metal elements other than lithium, and a boron element attached to the Ni content lithium complex oxide. The Ni content lithium complex oxide is a secondary particle in which primary particles are aggregated, the Ni content lithium complex oxide has a porosity of 2% or more and 10% or less, in the Ni content lithium complex oxide, a larger space than an average cross-sectional area of the primary particles does not exist inside the secondary particle in a cross-sectional observation image observed with an electron microscope, and the boron element is contained by 0.5 mol% or more and 3 mol% or less when a total of metal elements of the Ni content lithium complex oxide is 100 mol%.

By the positive electrode active material with the aforementioned structure, a nonaqueous electrolyte secondary battery having high energy density and also an excellent cycle characteristic can be achieved. Specifically, when the Ni content lithium complex oxide containing 70 mol% or more of Ni is used and the ratio of the boron element is 3 mol% or less, the increase of the energy density can be achieved relatively compared to a case in which the ratio of the boron element is over 3 mol% or the Ni content is 30 to 60 mol% as disclosed in Japanese Patent Application Publication No. 2015-22950, for example. In addition, when the secondary particle has a porosity of 2% or more, the space in the secondary particle is made smaller than the average cross-sectional area of the primary particles, and the ratio of the boron element is 0.5 mol% or more, the suitable space can be secured inside the secondary particle and for example, boron can be spread uniformly to a central part of the secondary particle. Therefore, the reaction with the electrolyte can be suppressed and the formation of a film on a surface of the primary particle can be suppressed. As a result, the increase in stress between the particles can be suppressed and the occurrence of a crack in the primary particle can be reduced. Furthermore, when the secondary particle has a porosity of 10% or less, the secondary particle cracks less easily and the particle shape can be kept stably.

In a preferred aspect of the positive electrode active material disclosed herein, the boron element exists on the surface of the primary particle inside the secondary particle. Thus, the reaction of the electrolyte on the surface of the primary particle can be suppressed more suitably and the formation of the film on the surface of the primary particle can be suppressed at a high level. As a result, the cycle characteristic of the battery can be improved further.

In a preferred aspect of the positive electrode active material disclosed herein, a compressive strength is 200 MPa or more. Thus, the mechanical strength of the positive electrode active material can be increased suitably and moreover, the cycle characteristic of the battery can be improved further.

In a preferred aspect of the positive electrode active material disclosed herein, the Ni content lithium complex oxide is a lithium-nickel-cobalt-manganese complex oxide. Thus, in addition to the cycle characteristic, another battery characteristic (for example, initial resistance) can also be improved.

In addition, the present disclosure provides a nonaqueous electrolyte secondary battery including a positive electrode, a negative electrode, and a nonaqueous electrolyte. This positive electrode includes the positive electrode active material described above. With such a structure, a battery with the high energy density and the excellent cycle characteristic can be achieved.

The present disclosure provides a manufacturing method for a positive electrode active material including a Ni content lithium complex oxide containing 70 mol% or more of nickel relative to a total of metal elements other than lithium, and a boron element attached to the Ni content lithium complex oxide. This manufacturing method includes a base material preparing step of preparing the Ni content lithium complex oxide as a base material, the Ni content lithium complex oxide being a secondary particle in which primary particles are aggregated, having a porosity of 2% or more and 10% or less, and excluding a larger space than an average cross-sectional area of the primary particles inside the secondary particle in a cross-sectional observation image observed with an electron microscope, and a boron introducing step of introducing the boron element into the space inside the secondary particle of the base material so that the boron element is contained by 0.5 mol% or more and 3 mol% or less when a total of metal elements of the Ni content lithium complex oxide is 100 mol%. Thus, the positive electrode active material as described above can be manufactured relatively easily.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a cross-sectional view schematically illustrating a positive electrode active material according to an embodiment; and
FIG. 2 is a cross-sectional view schematically illustrating an internal structure of a nonaqueous electrolyte secondary battery according to an embodiment.

### DETAILED DESCRIPTION OF THE PREFERRED EMBODIMENTS

Preferred embodiments of the present disclosure will be described below with reference to the drawings as appropriate. Matters other than matters particularly mentioned in the present specification and necessary for the implementation of the present disclosure (for example, the general configuration and manufacturing process of a nonaqueous electrolyte secondary battery that do not characterize the present disclosure) can be grasped as design matters of those skilled in the art based on the prior art in the relevant field. The present disclosure can be implemented on the basis of the contents of the present specification and common technical knowledge in the relevant field.

Note that in the drawings below, the members and parts with the same operation are denoted by the same reference signs and the overlapping description may be omitted or simplified. Moreover, the term "secondary battery" in this specification refers to a power storage device that can be charged and discharged repeatedly, and is to encompass a power storage element such as a so-called storage battery and an electric double-layer capacitor. Note that, in the present specification, the term "lithium ion secondary battery" refers to a general secondary battery that uses lithium ions as a charge carrier and can be charged and discharged by transfer of charges with the lithium ions between positive and negative electrodes. In the present specification, the notation "A to B" for a range signifies a value more than or equal to A and less than or equal to B, and is meant to encompass also the meaning of being "preferably more than A" and "preferably less than B".

### [Positive electrode active material]

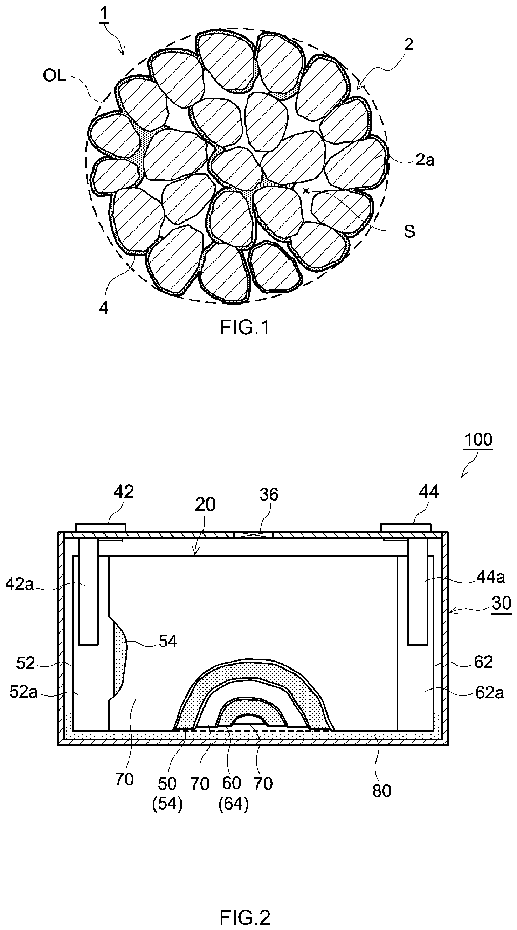

FIG. 1 is a cross-sectional view schematically illustrating a positive electrode active material 1 according to an embodiment. The positive electrode active material 1 contains a high Ni content lithium complex oxide 2, which is a base material, and a boron (B) element 4 attached to the high Ni content lithium complex oxide 2 as necessary components. The high Ni content lithium complex oxide 2 is one example of lithium complex oxides containing 70 mol% or more of Ni disclosed herein. The boron element 4 is attached to the high Ni content lithium complex oxide 2 by physical and/or chemical bonding typically. The boron element 4 may be contained as a compound (for example, oxide or Li compound). Note that FIG. 1 illustrates one example and the positive electrode active material 1 is not limited to the illustrated example.

The high Ni content lithium complex oxide 2 is a compound containing Ni as a necessary element, and containing 70 mol% or more of Ni relative to the total of the metal elements other than lithium from the viewpoint of improving the energy density of a battery. The Ni content is preferably 75 mol% or more, and for example 80 mol% or more. Specific examples include lithium-nickel complex oxides, lithium-nickel-cobalt complex oxides, lithium-nickel-manganese complex oxides, lithium-nickel-cobalt-manganese complex oxides, lithium-nickel-cobalt-aluminum complex oxides, lithium-iron-nickel-manganese complex oxides, and the like. Any of these may be used alone or two or more kinds may be used in combination. It is preferable that the high Ni content lithium complex oxide 2 further contains at least one kind of Co and Mn in addition to Ni. Among these, a lithium-nickel-cobalt-manganese complex oxide containing Ni, Co, and Mn is preferable for its excellent battery characteristics including low initial resistance and the like.

Note that, in the present specification, the term "lithium-nickel-cobalt-manganese complex oxide" encompasses oxides containing Li, Ni, Co, Mn, and O as constituent elements and moreover oxides containing one kind or two or more kinds of additive elements other than those above. Examples of such additive elements include transition metal elements, typical metal elements, and the like including Mg, Ba, Sr, Ca, Al, Ti, V, Cr, Y, Zr, Nb, Mo, Hf, Ta, W, Na, K, Fe, Cu, Zn, Sn, and the like. The additive element may be a metalloid element such as B, C, Si, or P or a non-metallic element such as S, F, Cl, Br, or I. This similarly applies to the lithium-nickel complex oxides, the lithium-nickel-cobalt complex oxides, the lithium-nickel-manganese complex oxides, the lithium-nickel-cobalt-aluminum complex oxides, the lithium-iron-nickel-manganese complex oxides, and the like described above.

The lithium-nickel-cobalt-manganese complex oxide preferably has a composition expressed by the following Formula (I):

Li₁₊ₓNi_{y}CO_{z}Mn_{(1-y-z)}M_{α}O_{2-β}Q_{β} (I)

In the above Formula (I), x, y, z, α, and β satisfy -0.3 ≤ x ≤ 0.3, 0.7 ≤ y ≤ 0.95, 0.02 ≤ z ≤ 0.28, 0 ≤ α ≤ 0.1, and 0 ≤ β ≤ 0.5, respectively, M represents at least one kind of element selected from the group consisting of Al, Zr, B, Mg, Fe, Cu, Zn, Sn, Na, K, Ba, Sr, Ca, W, Mo, Nb, Ti, and Si, and Q represents at least one kind of element selected from the group consisting of F, Cl, and Br.

Note that x satisfies preferably 0 ≤ x ≤ 0.3, more preferably 0 ≤ x ≤ 0.15, and is still more preferably 0. From the viewpoint of balancing the high energy density and the excellent cycle characteristic, y satisfies preferably 0.75 ≤ y ≤ 0.95 and for example 0.8 ≤ y ≤ 0.9, and z satisfies preferably 0.03 ≤ z ≤ 0.22 and more preferably 0.10 ≤ z ≤ 0.2. In addition, α satisfies preferably 0 ≤ α ≤ 0.05 and is more preferably 0. Furthermore, β satisfies preferably 0 ≤ β ≤ 0.1 and is more preferably 0.

The high Ni content lithium complex oxide 2 preferably has a layered rock-salt type crystal structure. Examples of the lithium complex oxide with such a crystal structure include lithium-nickel-cobalt-manganese complex oxides, lithium-nickel-cobalt-aluminum complex oxides, and the like. However, the crystal structure of the high Ni content lithium complex oxide 2 may be a spinel structure or the like. Note that the crystal structure can be checked by an X-ray diffraction method or the like.

From the viewpoint of improving the battery characteristic (for example, energy density or output characteristic), the average particle diameter (D50) of the high Ni content lithium complex oxide 2 may be generally 25 µm or less, and in one embodiment is 0.05 to 25 µm, preferably 1 to 23 µm, and for example 10 to 20 µm. Note that, in the present specification, the term "average particle diameter (D50)" refers to the median diameter (D50), which means the particle diameter corresponding to the cumulative frequency 50 vol% from the microparticle side with small particle diameter in the particle size distribution based on the volume in accordance with a laser diffraction/scattering method.

In FIG. 1, the high Ni content lithium complex oxide 2 has a substantially spherical shape; however, the shape may be irregular, for example. Note that, in the present specification, the term "substantially spherical shape" means a shape that can be regarded as being generally spherical as a whole and that has an average aspect ratio (major axis/minor axis ratio) of generally 1 to 2 and for example 1 to 1.5 in a cross-sectional observation image with an electron microscope.

The high Ni content lithium complex oxide 2 is in a form of a secondary particle in which a plurality of primary particles 2a are aggregated with a physical or chemical bonding power. The high Ni content lithium complex oxide 2 (that is, secondary particle) is a group of the primary particles 2a in which a number of primary particles 2a are gathered to form one particle. Note that, in the present specification, the term "primary particle" refers to the minimum unit of particles forming the high Ni content lithium complex oxide 2 and specifically, the minimum unit determined based on the apparent geometric mode. The number of primary particles 2a forming one secondary particle is typically 10 or more, and for example 20 or more. The number of primary particles 2a in one secondary particle can be checked by observation of the secondary particle at a magnification of 10,000 to 30,000 using an electron microscope (for example, scanning electron microscope).

The high Ni content lithium complex oxide 2 has a porous structure, and inside the secondary particle, spaces S derived from gaps between the aggregated primary particles 2a exist. The space S may or may not be open. The space S is a space that exists within a virtual outer line OL of the secondary particle in a cross-sectional view and that is typically surrounded by the primary particles 2a.

In the present embodiment, the porosity of the secondary particle is 2 to 10%. The porosity of the secondary particle may be, for example, 3% or more and 5% or more. When the porosity is a predetermined value or more, the initial resistance can be reduced. In addition, the suitable space S can be secured inside the secondary particle of the high Ni content lithium complex oxide 2, and for example, the boron element 4 can be spread uniformly to a central part of the secondary particle. As a result, the reaction with an electrolyte can be suppressed suitably and even after repeated charging and discharging, a film is formed less easily on a surface of the primary particle 2a. The porosity of the secondary particle may be 8% or less and 7% or less. When the porosity is a predetermined value or less, the energy density can be improved. In addition, the secondary particle is cracked less easily and the particle shape can be maintained stably. Additionally, the surface area to react with the electrolyte can be reduced. The porosity of the positive electrode active material 1 and the size of the space S inside the secondary particle can be adjusted by, for example, changing a generation condition (specifically, ammonium ion concentration in a reaction solution) when generating a hydroxide, which is a precursor, by a crystallization method, which will be described in detail in a manufacturing method.

Note that the porosity of the secondary particle can be obtained as below. That is to say, first, a sample for cross-sectional observation of the high Ni content lithium complex oxide 2 is manufactured by a cross-section polishing process or the like. Next, the sample for the cross-sectional observation is observed using an electron microscope (for example, scanning electron microscope), and thus, a cross-sectional observation image is acquired. From the obtained cross-sectional observation image, the primary particles 2a and the spaces S are binarized and the area of the entire secondary particle and the area of all the spaces in the secondary particle are obtained using image analysis software (for example, "ImageJ"). Then, the porosity (%) can be obtained from the following expression: (the area of the entire spaces/the area of the entire secondary particle) × 100.

The average primary particle diameter of the primary particles 2a may be, for example, 0.05 to 5 µm. From the viewpoint of suitably increasing the mechanical strength of the secondary particle and the cycle characteristic of the battery, the average primary particle diameter is preferably 1 µm or more and more preferably 1.5 µm or more. When the average primary particle diameter is a predetermined value or more, the reaction with the electrolyte can be suppressed more suitably. In addition, the average primary particle diameter is preferably 3 µm or less and more preferably 2 µm or less. When the average primary particle diameter is a predetermined value or less, the crack does not easily occur in the secondary particle even after repeated charging and discharging.

Note that, in the present specification, the term "average primary particle diameter" refers to the average value of major axes of the primary particles 2a (for example, 10 or more primary particles 2a) that are grasped from the cross-sectional observation image and selected optionally. The average primary particle diameter can be obtained in a manner that, for example, the major axis of each of the primary particles 2a selected optionally from the cross-sectional observation image is obtained using image analysis type particle size distribution measurement software (for example, "Mac-View") and the average value thereof is calculated.

In the present embodiment, in the cross-sectional observation image in which the secondary particle is observed with an electron microscope (for example, scanning electron microscope), the space S larger than the average cross-sectional area of the primary particles 2a does not exist inside the secondary particle. Thus, compared to when the aforementioned condition is not satisfied, the small space S can be secured suitably inside the secondary particle, and for example, the boron element 4 can be spread uniformly to the central part of the secondary particle. As a result, the reaction with the electrolyte can be suppressed suitably and the film is not easily formed on the surface of the primary particle 2a even after repeated charging and discharging. The magnitude relation between the average cross-sectional area of the primary particles 2a and the space S and the average primary particle diameter of the primary particles 2a can be adjusted by, for example, changing a sintering condition (specifically, sintering temperature and sintering time) when sintering a mixture of a hydroxide, which is the precursor, and a compound to serve as a lithium source, which will be described in detail below in the manufacturing method.

Note that the absence of the space S larger than the average cross-sectional area of the primary particles 2a inside the secondary particle can be checked as follows. That is to say, first, in the cross-sectional observation image, the primary particles 2a and the spaces S are binarized using image analysis software and the average cross-sectional area of the primary particles 2a (for example, 10 or more primary particles 2a) is obtained. In addition, the cross-sectional area of the largest space S among the spaces S (that is, regions closed by being surrounded by the primary particles 2a) is obtained. Then, when the cross-sectional area of the largest space S (largest space area) and the average cross-sectional area of the primary particles 2a (average primary particle area) satisfy the following relation: (largest space area/average primary particle area) ≤ 1.0, the aforementioned absence of the space S can be confirmed.

When the total of the metal elements in the high Ni content lithium complex oxide 2 is 100 mol%, the boron element 4 is contained by 0.5 to 3 mol%. The ratio of the boron element 4 may be, for example, 1.0 mol% or more and 1.5 mol% or more. When the ratio of the boron element 4 is a predetermined value or more, the boron element 4 can be spread uniformly in the high Ni content lithium complex oxide 2. As a result, the reaction with the electrolyte can be suitably suppressed and the cycle characteristic of the battery can be suitably improved. The ratio of the boron element 4 may be, for example, 2.5 mol% or less and 2.0 mol% or less. When the ratio of the boron element 4 is a predetermined value or less, the internal resistance can be reduced and the battery characteristic (for example, cycle characteristic or output characteristic) can be improved. Note that the ratio of the boron element 4 in the positive electrode active material 1 can be obtained by inductively coupled plasma (ICP) analysis.

The boron element 4 is preferably attached to at least an outer surface of the positive electrode active material 1, specifically a surface of the secondary particle of the high Ni content lithium complex oxide 2. Here, the coverage of the positive electrode active material 1 with the boron element 4 may be 50% or more. Note that the attachment of the boron element 4 on the surface of the secondary particle and the ratio (coverage) of the part that is covered with the boron element 4 can be checked by, for example, X-ray photoelectron spectroscopy (XPS) analysis performed on the positive electrode active material 1.

The boron element 4 preferably exists inside the secondary particle in addition to or instead of on the surface of the secondary particle. Specifically, the boron element 4 preferably exists on the surface of the primary particle 2a inside the secondary particle. The quantity of the boron element 4 inside the secondary particle may be either larger or smaller than the quantity of the boron element 4 on the surface of the secondary particle. Thus, the reaction with the electrolyte can be suppressed more suitably and the effect of the art disclosed herein can be obtained at a higher level. The presence of the boron element 4 inside the secondary particle can be checked by laser ablation inductively coupled plasma mass spectrometry (LA-ICP-MS) analysis.

The positive electrode active material 1 has a compressive strength of preferably generally 100 MPa or more, more preferably 120 MPa or more, still more preferably 150 MPa or more, and particularly preferably 180 MPa or more and 200 MPa or more. Thus, the mechanical strength of the positive electrode active material 1 can be suitably increased and in the end, the cycle characteristic of the battery can be improved further. The compressive strength may be, for example, 300 MPa or less and 250 MPa or less. Note that the term "compressive strength" in this specification means the compressive strength measured in accordance with "JIS R 1639-5: Test methods of properties of fine ceramic granules, Part 5: Compressive strength of a single granule". As the compressive strength, it is preferable to measure the positive electrode active materials 1 (for example, 10 or more positive electrode active materials 1) and employ the arithmetic average value thereof as a representative value.

### [Manufacturing method for positive electrode active material]

The positive electrode active material 1 as described above can be suitably manufactured by a manufacturing method including (1) a base material preparing step and (2) a boron introducing step in this order, for example. The manufacturing method disclosed herein may include another step additionally at an optional stage.
(1) The base material preparing step is a step of preparing the high Ni content lithium complex oxide 2 in the form of the secondary particle as the base material of the positive electrode active material 1. In one embodiment, (1) the base material preparing step includes (1-1) a precursor generating step of generating a hydroxide containing at least nickel as a precursor, and (1-2) a sintering step of sintering a mixture of the precursor and a lithium source to obtain the high Ni content lithium complex oxide 2, in this order. In (1) the base material preparing step, however, a commercial product may be purchased to prepare the high Ni content lithium complex oxide 2. In the example to be described below, a lithium-nickel-cobalt-manganese complex oxide is prepared as the base material.

(1-1) The precursor generating step is a step of generating the hydroxide as the precursor by a conventionally known crystallization method. This hydroxide contains a metal element other than lithium among the metal elements in the high Ni content lithium complex oxide 2 (that is, in the case of the lithium-nickel-cobalt-manganese complex oxide, Ni, Co, and Mn are contained).

In the present step, first, an aqueous solution including a metal element source (typically, water-soluble ionic compound) is prepared. Here, an aqueous solution including a Ni source, an aqueous solution including a Co source, and an aqueous solution including an Mn source are prepared. The aqueous solution can be prepared by dissolving a predetermined quantity of each of the metal element sources (Ni source, Co source, and Mn source) in an aqueous solvent. The aqueous solvent is typically water and may alternatively be a mixed solvent mainly containing water. Examples of the solvent other than water that forms the mixed solvent include an organic solvent that can be mixed with water uniformly, and for example, lower alcohol, lower ketones, or the like can be used. An anion of the metal element source can be selected as appropriate so that the metal element source is soluble in water, and may be, for example, a sulfate ion, a nitrate ion, a carbonate ion, a hydroxide ion, a chloride ion, or the like. In addition, the concentration of the aqueous solution is preferably adjusted so that the total of all the metal elements (Ni, Co, and Mn) becomes generally 1 to 3 mol/L.

In the present step, next, the prepared aqueous solutions including the metal element sources (Ni source, Co source, and Mn source) and an alkaline compound are added to a reaction container to prepare a reaction solution, which is stirred and mixed under an alkaline condition (under a condition of pH > 7). The mixing ratio for the aqueous solutions including the metal element sources is determined so that y and z in Formula (I) described above satisfy desired values, for example. A preferable example of the alkaline compound is a compound including a strong base (such as hydroxide of alkaline metal) and/or a weak base (such as ammonia) and not interrupting the generation of the hydroxide. Specific examples include ammonia (NH₃), sodium hydroxide (NaOH), potassium hydroxide (KOH), sodium carbonate (NaCOs), and the like. Among these, a compound including an ammonium ion (for example, ammonia) is preferably used. The stirring and mixing can be performed by, for example, irradiation with ultrasonic waves, a magnetic stirrer, or the like. Thus, in the reaction solution, the hydroxide containing Ni, Co, and Mn as the metal element is precipitated (crystallized) to generate the precursor. The precursor is in the form of the secondary particle in which the primary particles are aggregated.

In one example, in a case of using a compound including an ammonium ion (for example, ammonia) as the alkaline compound, the ammonium ion concentration in the reaction solution may be generally 0 to 30 g/L, preferably 5 to 25 g/L, for example 5 to 20 g/L, and 5 to 15 g/L. When the ammonium ion concentration in the reaction solution is in the aforementioned range, the porosity of the hydroxide and the size of the space, and the porosity of the positive electrode active material 1 and the size of the space S in the secondary particle can be suitably adjusted to be in the aforementioned range. The pH of the reaction solution may be generally 10 ≤ pH ≤ 14, preferably 11 ≤ pH ≤ 14, and for example 11 ≤ pH ≤ 12. The stirring speed may be generally 400 rpm or more, preferably 600 rpm or more, more preferably 800 rpm or more, and for example 1000 to 1500 rpm.

After the precipitation of the hydroxide ends, typically, the precursor is isolated and cleaned, and then dried. The isolation can be performed by a conventionally known method, for example a solid-liquid separation method such as centrifugal separation, filtration, or decantation, a spray-drying method, or the like. Then, by cleaning the isolated precursor with water or the like, the raw material compound that did not react, impurities, and the like are removed. The drying can be performed by a conventionally known method such as natural drying, drying with heat, drying with air, vacuum drying, or the like.

In (1-2) the sintering step, first, the obtained precursor and the lithium source are mixed. The mixing method is not limited in particular and may be a conventionally known dry mixing method or wet mixing method. From the viewpoints of simplicity and cost, the dry mixing method is preferable. The mixing can be performed using, for example, a jet mill, a ball mill, a planetary mixer, a disperser, a mortar, or the like. Examples of the lithium source include lithium hydroxide (LiOH), lithium carbonate (LiCO₃), lithium nitrate (LiNO₃), lithium sulfate (Li₂SO₄), and the like. As for the mixing ratio between the precursor and the lithium source, the molar number of Li to the total molar number of all the metal elements in the precursor is determined so that x in Formula (I) described above becomes a desired value, for example.

Then, the mixture of the precursor and the lithium source is sintered. Here, the sintering temperature may be generally 650°C or more, preferably 700°C or more, 750°C or more, and for example 800°C or more and generally 1000°C or less and for example 900°C or less. The sintering time may be generally 2 to 24 hours and preferably 5 to 12 hours. The temperature rising speed may be, for example, 5 to 40 °C/min. After that, an annealing process may be performed at 700°C for 12 to 48 hours, for example. When the sintering condition is in the aforementioned range, the magnitude relation between the space S and the average cross-sectional area of the primary particles 2a of the high Ni content lithium complex oxide 2 and the average primary particle diameter of the primary particles 2a can be adjusted to be within the aforementioned range. Thus, the high Ni content lithium complex oxide 2 can be manufactured as the base material.

In (2) the boron introducing step, the high Ni content lithium complex oxide 2 obtained in the base material preparing step and a boron source are mixed. The mixing method is not limited in particular and the conventionally known dry mixing method or wet mixing method as described as the examples in the sintering step can be employed as appropriate. An example of the boron source is borate (H₃BO₃). The mixing ratio between the high Ni content lithium complex oxide 2 and the boron source is determined so that the ratio of the boron element 4 is 0.5 to 3 mol% when the total of the metal elements in the high Ni content lithium complex oxide 2 is 100 mol%. In one embodiment, the mixture of the high Ni content lithium complex oxide 2 and the boron source is subjected to a heat treatment. The heat treatment temperature may be lower than the sintering temperature in (1-2) the sintering step described above typically, and may be 300 to 500°C, for example. The heat treatment time may be, for example, 1 to 10 hours. The temperature rising speed may be, for example, 5 to 40 °C/min. In this manner, the positive electrode active material 1 disclosed herein can be manufactured.

### [Nonaqueous electrolyte secondary battery]

FIG. 2 is a cross-sectional view schematically illustrating an internal structure of a nonaqueous electrolyte secondary battery 100 according to one embodiment. The nonaqueous electrolyte secondary battery 100 illustrated in FIG. 2 is a prismatic battery in which a flat electrode body 20 and a nonaqueous electrolyte 80 are housed and sealed within a flat and rectangular battery case 30. Note that FIG. 2 illustrates one example and the nonaqueous electrolyte secondary battery 100 is not limited to the illustrated example. The nonaqueous electrolyte secondary battery may be a coin type, a button type, a cylindrical type, a laminate case type, or the like in another embodiment.

The battery case 30 is an exterior container for housing the electrode body 20 and the nonaqueous electrolyte 80. As the material of the battery case 30, for example, a metal material with small weight and high thermal conductivity, such as aluminum, is used. On an outer surface of the battery case 30, a positive electrode terminal 42 and a negative electrode terminal 44 for external connection, and a thin safe valve 36 that is set to, when the internal pressure of the battery case 30 has risen to or above a predetermined level, release the internal pressure are provided. The positive electrode terminal 42 is electrically connected to a positive electrode current collection plate 42a, and the negative electrode terminal 44 is electrically connected to a negative electrode current collection plate 44a.

Here, the electrode body 20 is a wound electrode body in which a positive electrode sheet 50 and a negative electrode sheet 60 are overlapped on each other across two separator sheets 70 with a band shape and wound in a longitudinal direction. In another embodiment, however, the electrode body may be a stack type electrode body formed in a manner that a rectangular positive electrode and a rectangular negative electrode are stacked across a rectangular separator. The positive electrode sheet 50 has a structure in which a positive electrode active material layer 54 is formed along the longitudinal direction on one surface or both surfaces (here, both surfaces) of a positive electrode current collector 52 with a band shape as illustrated in a partially ruptured view of FIG. 2. The negative electrode sheet 60 has a structure in which a negative electrode active material layer 64 is formed along the longitudinal direction on one surface or both surfaces (here, both surfaces) of a negative electrode current collector 62 with a band shape.

At both ends of the electrode body 20 in a winding axis direction (that is, a width direction orthogonal to the longitudinal direction), a positive electrode active material layer non-formation part 52a where the positive electrode active material layer 54 is not formed and the positive electrode current collector 52 is exposed and a negative electrode active material layer non-formation part 62a where the negative electrode active material layer 64 is not formed and the negative electrode current collector 62 is exposed are formed in a manner of protruding outward. Each of the positive electrode active material layer non-formation part 52a and the negative electrode active material layer non-formation part 62a functions as a current collection part. The positive electrode active material layer non-formation part 52a and the negative electrode active material layer non-formation part 62a include the positive electrode current collection plate 42a and the negative electrode current collection plate 44a, respectively. Note that the shape of the positive electrode active material layer non-formation part 52a and the negative electrode active material layer non-formation part 62a is not limited to the shape illustrated in the drawing. Each of the positive electrode active material layer non-formation part 52a and the negative electrode active material layer non-formation part 62a may be formed as a current collection tab that is processed into a predetermined shape.

The positive electrode current collector 52 has a band shape. The positive electrode current collector 52 is preferably made of metal, and more preferably made of a metal foil. The positive electrode current collector 52 is an aluminum foil here. The positive electrode active material layer 54 includes at least the aforementioned positive electrode active material 1. The positive electrode active material layer 54 may include a positive electrode active material of the kind other than the aforementioned positive electrode active material 1. When the entire positive electrode active material in the positive electrode active material layer 54 is 100 mass%, the ratio of the aforementioned positive electrode active material 1 may be generally 50 mass% or more, preferably 60 mass% or more, more preferably 80 mass% or more, and for example 85 to 100 mass%. Thus, the effect of the art disclosed herein can be obtained at the high level.

The positive electrode active material layer 54 may additionally include an additive component other than the positive electrode active material. Examples of the additive component include a conductive material, a binder, trilithium phosphate, and the like. Examples of the conductive material include carbon black such as acetylene black (AB) and carbon materials such as graphite. Examples of the binder include fluorine resins such as polyvinylidene fluoride (PVDF).

When the entire positive electrode active material layer 54 is 100 mass%, the ratio of the positive electrode active material is preferably 70 mass% or more, more preferably 80 to 99 mass%, and still more preferably 85 to 98 mass%, without particular limitations. The ratio of the conductive material is preferably 0.5 to 15 mass%, for example 1 to 10 mass%, and more preferably 1 to 5 mass%. The ratio of the binder is preferably 0.5 to 15 mass%, for example 0.8 to 10 mass%, and more preferably 1 to 5 mass%.

The density of the positive electrode active material layer 54 is preferably 3.0 g/cm³ or more, more preferably 3.2 g/cm³ or more, still more preferably 3.4 g/cm³ or more, and particularly preferably 3.5 to 4.0 g/cm³ from the viewpoint of increasing the volume energy density. Increasing the density of the positive electrode active material layer 54 results in easy cracking or chipping of the positive electrode active material. In view of this, it is particularly effective to use the aforementioned positive electrode active material 1, particularly the positive electrode active material 1 in which the boron element 4 exists on the surface of the primary particle 2a inside the secondary particle.

The negative electrode current collector 62 has a band shape. The negative electrode current collector 62 is preferably made of metal, and more preferably made of a metal foil. The negative electrode current collector 62 is a copper foil here. The negative electrode active material layer 64 includes a negative electrode active material. As the negative electrode active material, for example, a carbon material such as graphite, hard carbon, or soft carbon can be used. The negative electrode active material layer 64 may include an additive component other than the negative electrode active material. Examples of the additive component include a binder, a thickener, and the like. Examples of the binder include rubbers such as styrene butadiene rubber (SBR) and fluorine resins such as polyvinylidene fluoride (PVDF). Examples of the thickener include celluloses such as carboxymethyl cellulose (CMC).

The separator sheet 70 has a band shape. The separator sheet 70 may be, for example, a porous sheet (film) made of resin such as polyethylene (PE), polypropylene (PP), or polyester. Such a porous sheet may have a single-layer structure or a multilayer structure of two or more layers (for example, three-layer structure in which a PP layer is stacked on each surface of a PE layer). The separator sheet 70 may have a heat-resistant layer (HRL) on a surface thereof.

The nonaqueous electrolyte 80 is typically a nonaqueous electrolyte solution containing a nonaqueous solvent and a supporting salt (electrolyte salt). In another embodiment, however, the nonaqueous electrolyte 80 may be a polymer electrolyte. As the nonaqueous solvent, any of various kinds of organic solvents including carbonates, ethers, esters, and the like that are usable for electrolyte solutions of general nonaqueous electrolyte secondary batteries can be used alone or two or more kinds thereof can be used as appropriate in combination. Specific examples include ethylene carbonate (EC), propylene carbonate (PC), diethyl carbonate (DEC), dimethyl carbonate (DMC), ethyl methyl carbonate (EMC), and the like. Examples of the supporting salt include lithium salts such as LiPF₆ and LiBF₄.

The nonaqueous electrolyte secondary battery 100 is usable in various applications, and for example, can be suitably used as a motive power source for a motor (power source for driving) that is mounted in a vehicle such as a passenger car or a truck because of having the high energy density and the excellent cycle characteristic. The vehicle is not limited to a particular type, and may be, for example, a plug-in hybrid electric vehicle (PHEV), a hybrid electric vehicle (HEV), or a battery electric vehicle (BEV).

Examples of the present disclosure are hereinafter described but these examples are not intended to limit the present disclosure to the examples below.

### [Example 1]

### <Preparation of positive electrode active material>

An aqueous solution including a Ni source, an aqueous solution including a Co source, an aqueous solution including an Mn source, a sodium hydroxide aqueous solution, and an ammonia solution were prepared, mixed under a condition with an ammonium ion concentration of 15 g/L so that the molar ratio among Ni, Co, and Mn became 8:1:1, and stirred to be mixed at a stirring speed of 1000 rpm. Thus, a hydroxide containing Ni, Co, and Mn as the metal elements (that is, Ni_{0.8}Co_{0.1}Mn_{0.1}(OH)₂) was precipitated. The obtained hydroxide was filtered and washed with water, and then dried. Next, the obtained hydroxide and lithium hydroxide powder were mixed so that the molar ratio of Li to the total of Ni, Co, and Mn (Li/(Ni + Co + Mn)) became 1. The resulting mixture was sintered for 10 hours at 800°C in an oxygen atmosphere. Thus, a high Ni content lithium complex oxide (LiNi_{0.8}Co_{0.1}Mn_{0.1}O₂) in the form of the secondary particle with a porosity of 2% was prepared. Note that the porosity was measured by the aforementioned method.

Next, the high Ni content lithium complex oxide and borate as the additive (boron source) were mixed in a dry procedure. The borate was mixed so that the ratio of the boron element became 0.5 mol% when the total of the metal elements in the high Ni content lithium complex oxide was 100 mol%. Then, the mixture was sintered for 3 hours at 300°C in the oxygen atmosphere, so that boron was introduced into the space in the secondary particle of the high Ni content lithium complex oxide and the positive electrode active material was obtained.

### <Manufacture of lithium ion secondary battery for evaluation>

The positive electrode active material, carbon black as the conductive material, and polyvinylidene fluoride (PVDF) as the binder were mixed in a mass ratio of positive electrode active material:AB:PVDF = 97.5:1.5:1.0, and a suitable amount of N-methyl-2-pyrrolidone (NMP) was added to the obtained mixture; thus, a slurry for positive electrode active material layer formation was prepared.

Next, this slurry for the positive electrode active material layer formation was applied on both surfaces of an aluminum foil (positive electrode current collector) and dried, so that the positive electrode active material layer was formed. Then, the positive electrode active material layer was subjected to roll pressing in a roller so as to have a density of 3.60 g/cm³, and then cut into a predetermined size; thus, the positive electrode sheet was manufactured.

In addition, graphite (C) as the negative electrode active material, styrene butadiene rubber (SBR) as the binder, and carboxyl methyl cellulose (CMC) as the thickener were mixed in a mass ratio of C:SBR:CMC = 98:1:1 in an ion exchanged water, and thus a slurry for negative electrode active material layer formation was prepared. This slurry for the negative electrode active material layer formation was applied on both surfaces of a copper foil (negative electrode current collector) and dried; thus, the negative electrode active material layer was formed. Subsequently, the negative electrode active material layer was subjected to roll pressing in a roller and then cut into a predetermined size; thus, the negative electrode sheet was manufactured.

As the separator, a porous polyolefin sheet with a three-layer structure of PP/PE/PP was prepared. Next, the positive electrode sheet and the negative electrode sheet were overlapped on each other with the separator therebetween; thus, the electrode body was manufactured. Next, an electrode terminal was attached to the electrode body, this was inserted into the battery case, and the nonaqueous electrolyte was injected. Note that, as the nonaqueous electrolyte, a nonaqueous electrolyte in which LiPF₆ as the supporting salt was dissolved at a concentration of 1 mol/L in a mixed solvent including ethylene carbonate (EC) and ethyl methyl carbonate (EMC) in a volume ratio of EC:EMC = 30:70 was used. After that, the battery case was sealed; thus, a lithium ion secondary battery for evaluation according to Example 1 was obtained.

### [Examples 2 to 4 and Comparative Examples 1 to 7]

In each of Examples 2 to 4 and Comparative Examples 1, 2, and 5, a lithium ion secondary battery for evaluation was manufactured by a method similar to that in Example 1 except that a high Ni content lithium complex oxide having the porosity shown in Table 1 and containing boron (borate) at a ratio shown in Table 1 was used. Note that the porosity of the high Ni content lithium complex oxide was adjusted by changing the generation condition for the hydroxide to serve as the precursor. Specifically, the ammonium ion concentration of the reaction solution in Examples 2 and 3 was lower than that in Example 1.

In Comparative Example 3, a lithium ion secondary battery for evaluation was manufactured by a method similar to that in Example 2 except that a high Ni content lithium complex oxide with the conventionally known hollow shape (that is, the shape including a shell part formed of the secondary particle where the primary particles were fused, and a hollow part formed inside the shell part) was used. In Comparative Example 4, a lithium ion secondary battery for evaluation was manufactured by a method similar to that in Example 2 except that a high Ni content lithium complex oxide was used directly without the addition of the additive (borate). In Comparative Examples 6 and 7, a lithium ion secondary battery for evaluation was manufactured by a method similar to that in Example 1 except that a high Ni content lithium complex oxide with the porosity shown in Table 1 was used, and the high Ni content lithium complex oxide containing the compound shown in Table 1 instead of borate as the additive was used.

### <Evaluation 1 of positive electrode active material>

Whether the element of the additive (specifically, B (boron) in Examples 1 to 4 and Comparative Examples 1 to 3 and 5, Al (aluminum) in Comparative Example 6, and W (tungsten) in Comparative Example 7) entered the secondary particle was checked by LA-ICP-MS analysis. Note that the measurement resolution was 4 µm and since S/N was low, the measurement was performed at arbitrary ten points for determination. The results are shown in Table 1. Table 1 shows "detected" when the element of the additive was confirmed inside (here, at a central part of) the secondary particle and "not detected" when the element was not confirmed.

### <Evaluation 2 of positive electrode active material>

By the aforementioned method, a sample for the cross-sectional observation of the positive electrode active material was manufactured and a cross-sectional observation image was acquired using a scanning electron microscope. Then, a binarizing process was performed using image analysis software; for example, a part with the primary particles was made white and a space part without the primary particles was made black. Next, the average cross-sectional area of ten arbitrary primary particles and the cross-sectional areas of the spaces S were obtained. Then, the ratio of the cross-sectional area of the largest space S (largest space area) to the average cross-sectional area of the primary particles (average primary particle area), that is, (largest space area)/(average primary particle area) was calculated. The results are shown in Table 1.

### <Evaluation 3 of positive electrode active material>

The compressive strength of the positive electrode active material was obtained in accordance with JIS R 1639-5 using a microparticle crushing force measurement apparatus (model NS-A100 type, a pressing probe with a point diameter of Φ20 µm, manufactured by Nano Seeds Corporation). The results are shown in Table 1.

### <Evaluation of cycle characteristic>

Each lithium ion secondary battery for evaluation was charged with constant current to 4.18 V with a current density of 0.2 mA/cm², and then charged with constant voltage until the current density became 0.04 mA/cm². Next, the lithium ion secondary battery for evaluation was discharged with constant current to 3.48 V with a current density of 0.2 mA/cm². Regarding this charging and discharging as one cycle, 300 cycles of charging and discharging were repeated in each lithium ion secondary battery for evaluation. Based on the discharge capacity in the first cycle and the discharge capacity in the 300-th cycle, the capacity retention (%) was calculated from the following expression: (discharge capacity in the 300-th cycle/discharge capacity in the first cycle) × 100. The results are shown in Table 1.

**[Table 1]**

| | Porosity (%) | Additive | Amount of additive (mol%) | Detection of additive inside secondary particle | Compressive strength (MPa) | Largest space area/average primary particle area | Capacity retention @300 eye |
|---|---|---|---|---|---|---|---|
| Example 1 | 2 | Borate | 0.5 | Detected | 180 | 1.0 or less | 81.1% |
| Example 2 | 10 | Borate | 0.5 | Detected | 125 | 1.0 or less | 82.0% |
| Example 3 | 10 | Borate | 3.0 | Detected | 169 | 1.0 or less | 82.5% |
| Comparative Example 1 | 0.5 | Borate | 0.5 | Not detected | 194 | 1.0 or less | 70.1% |
| Comparative Example 2 | 20 | Borate | 0.5 | Detected | 85 | 1.0 or less | 75.5% |
| Comparative Example 3 | 10 | Borate | 0.5 | Detected* | 124 | Over 1.0 | 70.9% |
| Comparative Example 4 | 10 | - | 0 | - | 120 | 1.0 or less | 69.2% |
| Comparative Example 5 | 10 | Borate | 5.0 | Detected | 180 | 1.0 or less | 76.1% |
| Comparative Example 6 | 3 | Aluminum oxide | 0.5 | Detected | 165 | 1.0 or less | 74.7% |
| Comparative Example 7 | 5 | Tungsten oxide | 0.5 | Detected | 189 | 1.0 or less | 75.0% |
| Example 4 | 2 | Borate | 3.0 | Detected | 224 | 1.0 or less | 84.6% |

| | | | | | | | |
|---|---|---|---|---|---|---|---|
| *Less than in Example 2 | | | | | | | |

The results in Table 1 indicate that the capacity retention was the lowest in Comparative Example 4 in which the additive (borate) was not added. It is presumed that this is because when the high Ni content lithium complex oxide contracted under high voltage, the electrolyte solution entered the space in the secondary particle to react with the surface of the primary particle and form a film, which resulted in the increase in stress between the particles at the expansion and a crack occurring in the primary particle.

Moreover, in Comparative Examples 1 and 2 in which the porosity of the secondary particle was 0.5% or 20%, Comparative Example 3 in which the high Ni content lithium complex oxide with the hollow shape was used, Comparative Example 5 in which the amount of adding the additive was as large as 5.0 mol%, and Comparative Examples 6 and 7 in which aluminum oxide or tungsten oxide was used as the additive, the capacity retention was improved to some extent but the effect of the additive was small. Additionally, the compressive strength was low in Comparative Example 2. It is considered that this is because the porosity of the secondary particle was too low and the entry of the additive into the secondary particle was therefore small in Comparative Example 1. In addition, in Comparative Example 2, it is considered that the porosity of the secondary particle was too high and the strength of the secondary particle itself was reduced, and accordingly, the secondary particle was no longer resistant against the expansion and contraction at the charging and discharging, so that a crack easily occurred and the deterioration was accelerated. In Comparative Example 3, it is considered that since the particle has a hollow shape, larger spaces than the average primary particle area exist unevenly inside the secondary particle, so that the entry of boron into the secondary particle was small. In Comparative Example 5, it is considered that the attachment of boron resulted in the excessive increase of the internal resistance.

In contrast to these comparative examples, in Examples 1 to 4 in which the porosity of the secondary particle was 2 to 10%, the larger space than the average cross-sectional area of the primary particles did not exist inside the secondary particle, and the ratio of the boron element was 0.5 to 3 mol% when the total of the metal elements in the high Ni content lithium complex oxide was 100 mol%, it is understood that the capacity retention is high relatively and the cycle characteristic is improved. These results indicate the technical meaning of the present disclosure.

As described above, the following items are given as specific aspects of the art disclosed herein.
Item 1: A positive electrode active material including a Ni content lithium complex oxide containing 70 mol% or more of nickel relative to a total of metal elements other than lithium, and a boron element attached to the Ni content lithium complex oxide, in which the Ni content lithium complex oxide is in a form of a secondary particle in which primary particles are aggregated, the Ni content lithium complex oxide has a porosity of 2% or more and 10% or less, in the Ni content lithium complex oxide, a larger space than an average cross-sectional area of the primary particles does not exist inside the secondary particle in a cross-sectional observation image observed with an electron microscope, and the boron element is contained by 0.5 mol% or more and 3 mol% or less when a total of metal elements of the Ni content lithium complex oxide is 100 mol%.
Item 2: The positive electrode active material according to Item 1, in which the boron element exists on a surface of the primary particle inside the secondary particle.
Item 3: The positive electrode active material according to Item 1 or Item 2, in which a compressive strength is 200 MPa or more.
Item 4: The positive electrode active material according to any one of Item 1 to Item 3, in which the Ni content lithium complex oxide is a lithium-nickel-cobalt-manganese complex oxide.
Item 5: A nonaqueous electrolyte secondary battery including a positive electrode, a negative electrode, and a nonaqueous electrolyte, in which the positive electrode includes the positive electrode active material according to any one of Item 1 to Item 4.

The specific examples of the present disclosure have been described above in detail; however, these are examples and will not limit the scope of claims. The techniques described in the scope of claims include those in which the specific examples exemplified above are variously modified and changed.

### [Reference Signs List]

1 Positive electrode active material
2 High Ni content lithium complex oxide (Ni content lithium complex oxide containing 70 mol% or more of nickel, secondary particle)
2a Primary particle
4 Boron element
20 Electrode body
30 Battery case
42 Positive electrode terminal
44 Negative electrode terminal
50 Positive electrode sheet (positive electrode)
54 Positive electrode active material layer
60 Negative electrode sheet (negative electrode)
64 Negative electrode active material layer
70 Separator sheet (separator)
80 Nonaqueous electrolyte
100 Nonaqueous electrolyte secondary battery

## Claims

1. A positive electrode active material (1) including a Ni content lithium complex oxide (2) containing 70 mol% or more of nickel relative to a total of metal elements other than lithium, and a boron element (4) attached to the Ni content lithium complex oxide (2), wherein
the Ni content lithium complex oxide (2) is a secondary particle in which primary particles (2a) are aggregated and has a porosity of 2% or more and 10% or less,
in the Ni content lithium complex oxide (2), a larger space than an average cross-sectional area of the primary particles (2a) does not exist inside the secondary particle in a cross-sectional observation image observed with an electron microscope, and
the boron element (4) is contained by 0.5 mol% or more and 3 mol% or less when a total of metal elements of the Ni content lithium complex oxide (2) is 100 mol%.

2. The positive electrode active material (1) according to claim 1, wherein the boron element 4 exists on a surface of the primary particle (2a) inside the secondary particle.

3. The positive electrode active material (1) according to claim 1 or 2, wherein a compressive strength is 200 MPa or more.

4. The positive electrode active material (1) according to any one of claims 1 to 3, wherein the Ni content lithium complex oxide (2) is a lithium-nickel-cobalt-manganese complex oxide.

5. A nonaqueous electrolyte secondary battery (100) comprising a positive electrode 50, a negative electrode (60), and a nonaqueous electrolyte, wherein the positive electrode (50) includes the positive electrode active material (1) according to claim 1 or 2.

6. A manufacturing method for a positive electrode active material (1) including a Ni content lithium complex oxide (2) containing 70 mol% or more of nickel relative to a total of metal elements other than lithium, and a boron element (4) attached to the Ni content lithium complex oxide (2), the manufacturing method comprising:
a base material preparing step of preparing the Ni content lithium complex oxide (2) as a base material, the Ni content lithium complex oxide (2) being a secondary particle in which primary particles (2a) are aggregated, having a porosity of 2% or more and 10% or less, and excluding a larger space than an average cross-sectional area of the primary particles (2a) inside the secondary particle in a cross-sectional observation image observed with an electron microscope; and
a boron introducing step of introducing the boron element (4) into the space inside the secondary particle of the base material so that the boron element (4) is contained by 0.5 mol% or more and 3 mol% or less when a total of metal elements of the Ni content lithium complex oxide (2) is 100 mol%.
